(19) Europäisches Patentamt
European Patent Office
Office européen des brevets

(11) **EP 3 644 545 B1**

(12) **EUROPEAN PATENT SPECIFICATION**

(45) Date of publication and mention
of the grant of the patent:
**06.04.2022 Bulletin 2022/14**

(21) Application number: **19204853.6**

(22) Date of filing: **23.10.2019**

(51) International Patent Classification (IPC):
**H04L 9/00** *(2022.01)*          **H04L 9/08** *(2006.01)*

(52) Cooperative Patent Classification (CPC):
**H04L 9/008; H04L 9/002; H04L 9/085**

(54) **APPARATUS AND METHOD FOR ENCRYPTION AND DECRYPTION**

VORRICHTUNG UND VERFAHREN ZUR VERSCHLÜSSELUNG UND ENTSCHLÜSSELUNG

APPAREIL ET PROCÉDÉ DE CRYPTAGE ET DE DÉCRYPTAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2018 KR 20180126802**

(43) Date of publication of application:
**29.04.2020 Bulletin 2020/18**

(73) Proprietor: **Samsung SDS Co., Ltd.
Seoul 05510 (KR)**

(72) Inventors:
• **KIM, Eun-Kyung**
  **05510 Seoul (KR)**
• **YOON, Hyo-Jin**
  **05510 Seoul (KR)**

(74) Representative: **Grünecker Patent- und
Rechtsanwälte
PartG mbB
Leopoldstraße 4
80802 München (DE)**

(56) References cited:
• **RALF KUESTERS ET AL: "Security Analysis of
Re-Encryption RPC Mix Nets", IACR,
INTERNATIONAL ASSOCIATION FOR
CRYPTOLOGIC RESEARCH, vol.
20150401:134600, 29 March 2015 (2015-03-29),
pages 1-50, XP061018223, [retrieved on
2015-03-29]**
• **BERNARDO DAVID ET AL: "Kaleidoscope: An
Efficient Poker Protocol with Payment
Distribution and Penalty Enforcement", IACR,
INTERNATIONAL ASSOCIATION FOR
CRYPTOLOGIC RESEARCH , vol.
20180418:083858 18 April 2018 (2018-04-18),
pages 1-29, XP061026762, Retrieved from the
Internet: URL:http://eprint.iacr.org/2017/899.pdf
[retrieved on 2018-04-18]**

**Description**

CROSS-REFERENCE TO RELATED APPLICATION

This application claims priority to and the benefit of Korean Patent Application No. 10-2018-0126802, filed on October 23, 2018.

BACKGROUND

**1. Field**

Embodiments of the present disclosure relate to a technique for encryption and decryption.

**2. Discussion of Related Art**

In a related art including U.S. Patent No. 9,252,942, a reliable user (a secret key manager) generates a public key and a secret key and distributes the public key to all of a plurality of users in order to provide a stable data convergence service to the users using homomorphic encryption. In this case, the users may encrypt their own data using the distributed public key and then perform homomorphic evaluation of the encrypted data. Also, when general users send a description request to the secret key manager, the secret key manager transmits a decrypted plaintext evaluation result to the general users.

In such a related art, a secret key manger manages a secret key, and thus the safety of the entire system depends entirely on the safety of the secret key manager. That is, when the secret key is leaked through the secret key manager, data of all the users can be recovered, and the safety of the whole system is damaged.

Furthermore, for users who cannot trust each other, it is not possible to set only one secret key manger that all the users can trust.

Ralf Kuesters et al.: "Security Analysis of Re-Encryption RPC Mix Nets", IACR, International Association for Cryptologic Research, vol. 20150401:134600, 29 March 2015 (2015-03-29), pages 1-50, relates to re-encryption randomized partial checking mix nets which play a central role in modern e-voting systems. Such a mix net consists of a number of senders, a plurality of mix servers, auditors, and a bulletin board. In a setup phase each mix server generates a private/public key pair and posts the public key on the bulletin board, along with a proof of knowledge of the corresponding private key. The public keys of all of the mixed servers are then combined to obtain the public encryption key to be used by the senders. In a submit phase, every sender chooses an input plaintext and encrypts it using the public key. The resulting ciphertext, along with the zero knowledge proof, is posted by the sender on the bulletin board. In the mixing phase, a first mix server uses the sequence of ciphertexts produced by the senders as an input, processes it, and posts the result, which is again a sequence of ciphertexts, on the bulletin board. This output becomes the input of the next mixed server. Each mixed server randomly changes the order of the ciphertexts in the sequence of ciphertexts and re-encrypts the ciphertexts. In a decryption phase, the mixed servers jointly decrypt every ciphertext from the output of the mixing phase and provide a proof of correct decryption.

Bernardo David et al.: "Kaleidoscope: An Efficient Poker Protocol with Payment Distribution and Penalty Enforcement", IACR, International Association for Cryptologic Research, vol. 20180418:083858 18 April 2018 (2018-04018), pages 1-29, relates to an efficient poker protocol and discloses a (n,n) - threshold ElGamal cryptosystem. In the system, each party generates a random secret key share and broadcasts a related private key share along with the proof of knowledge of the secret key share. Once all the parties have broadcast the public key share each party verifies proofs and reconstructs the public key based on all public key shares. A message is encrypted with the public key as a regular ElGamal encryption with a certain randomness. For the decryption of a message, each party broadcasts a decryption share which represents a part decryption of the message using the secret key share of the party. Once all parties have broadcast the decryption share the message can be determined based on all decryption shares.

SUMMARY

The object of the present invention is to provide an enhanced cryptographic method for performing distributed encryption and decryption.

This object is solved by the subject matter of the independent claims.

Preferred embodiments are defined in the dependent claims.

Embodiments of the present disclosure are directed to providing an apparatus and method for encryption and decryption.

According to an aspect of the present disclosure, an encryption method performed by a computing apparatus including one or more processors and a memory for storing one or more programs executed by the one or more processors includes generating a public key share of a user, receiving public key shares of one or more other users from terminals of the one or more other users, generating a public key using the public key share of the user and the public key shares of the one or more other users, and encrypting plaintext using the public key.

The generating of the public key share may include generating a private key share of the user and generating a public key share of the user using the private key share of the user.

The public key shares of the one or more other users may be generated using private key shares of the one or more other users.

The encryption method may further include providing the generated public key share to the terminals of the one or more other users.

According to another aspect of the present disclosure, an encryption apparatus includes one or more processors, a memory, and one or more programs, wherein the one or more programs are stored in the memory and executed by the one or more processors, and the programs include instructions for generating a public key share of a user, receiving public key shares of one or more other users from terminals of the one or more other users, generating a public key using the public key share of the user and the public key shares of the one or more other users, and encrypting plaintext using the public key.

The generating of the public key share may include generating a private key share of the user and generating a public key share of the user using the private key share of the user.

The public key shares of the one or more other users may be generated using private key shares of the one or more other users.

The program may further include instructions for providing the generated public key share to the terminals of the one or more other users.

According to another aspect of the present disclosure, a decryption method performed by a computing apparatus including one or more processors and a memory for storing one or more programs executed by the one or more processors includes generating a partial decryption result for a ciphertext encrypted with a public key by using a private key share of a user, requesting terminals of one or more other users to perform partial decryption for the ciphertext, receiving partial decryption results for the ciphertext using private key shares of the one or more other users from the one or more other user terminals, and generating plaintext for the ciphertext using the generated partial decryption result and the partial decryption results received from the one or more other users.

The public key may be generated using a public key share of the user and public key shares of the one or more other users.

The public key share of the user may be generated using the private key share of the user, and the public key shares of the one or more other users may be generated using the private key shares of the one or more other users.

The ciphertext may be a ciphertext generated by evaluating a plurality of ciphertexts encrypted with the public key in an encrypted state.

The plaintext may be a result of performing evaluation on plaintexts for the plurality of ciphertexts.

The ciphertext may be a ciphertext generated by adding the plurality of ciphertexts encrypted with the public key in an encrypted state.

The plaintext may be a result of adding plaintexts for the plurality of ciphertexts.

The generating of the plaintext may include generating plaintext for the ciphertext by adding the generated partial decryption result and the partial decryption results received from the one or more other users.

According to another aspect of the present disclosure, a decryption apparatus includes one or more processors, a memory, and one or more programs, wherein the one or more programs are stored in the memory and executed by the one or more processors, and the program includes instructions for generating a partial decryption result for a ciphertext encrypted with a public key by using a private key share of a user, requesting terminals of one or more other users to perform partial decryption of the ciphertext, receiving partial decryption results for the ciphertext using private key shares of the one or more other users from the one or more other user terminals, and generating plaintext for the ciphertext using the generated partial decryption result and the partial decryption results received from the one or more other users.

The public key may be generated using a public key share of the user and public key shares of the one or more other users.

The public key share of the user may be generated using the private key share of the user, and the public key shares of the one or more other users may be generated using the private key shares of the one or more other users.

The ciphertext may be a ciphertext generated by evaluating a plurality of ciphertexts encrypted with the public key in an encrypted state.

The plaintext may be an evaluation result between plaintexts for the plurality of ciphertexts.

The ciphertext may be a ciphertext generated by adding the plurality of ciphertexts encrypted with the public key in an encrypted state.

The plaintext may be a result of adding plaintexts for the plurality of ciphertexts.

The generating of the plaintext may include generating plaintext for the ciphertext by adding the generated partial decryption result and the partial decryption results received from the one or more other users.

BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:

FIG. 1 is a block diagram of an encryption system according to an embodiment of the present disclosure;
FIG. 2 is a sequence diagram showing a public key generation process according to an embodiment of the present disclosure;
FIG. 3 is a sequence diagram showing a decryption process according to an embodiment of the present disclosure; and
FIG. 4 is a block diagram illustrating a computing environment including a computing apparatus suitable for use in example embodiments.

DETAILED DESCRIPTION OF EXEMPLARY EMBODIMENTS

Hereinafter, exemplary embodiments of the present disclosure will be described with reference to the accompanying drawings. The following detailed description is provided to assist the reader in gaining a comprehensive understanding of methods, apparatuses, and/or systems described herein. However, this is merely an example, and the present disclosure is not limited thereto.
In describing embodiments of the present disclosure, when it is determined that a detailed description of a known technique associated with the present disclosure would unnecessarily obscure the subject matter of the present disclosure, the detailed description will be omitted. Also, terms used herein are defined in consideration of functions used in the present disclosure and may be changed depending on a user, the intent of an operator, or a custom. Therefore, the definitions should be made based on the contents throughout the specification. The terminology used herein is only for the purpose of describing embodiments of the present disclosure and should not be limiting. The singular forms "a," "an," and "the" are intended to include the plural forms as well, unless the context clearly indicates otherwise. It should be understood that the terms "comprises," "comprising," "includes," "includes,": and/or "including" specify the presence of stated features, integers, steps, operations, elements, components, and/or groups thereof when used herein, but do not preclude the presence or addition of one or more other features, integers, steps, operations, elements, components, and/or groups thereof.

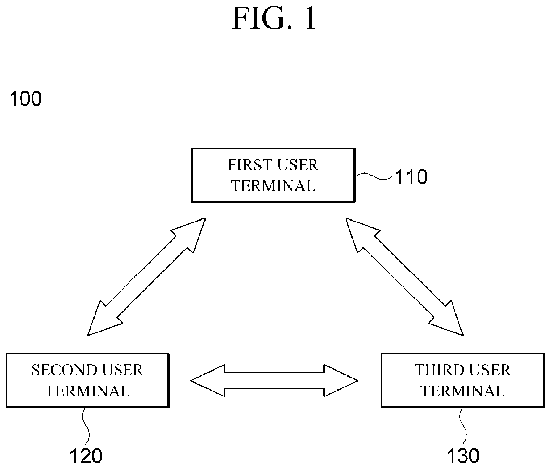

FIG. 1 is a block diagram of an encryption system according to an embodiment of the present disclosure.
Referring to FIG. 1, an encryption system 100 according to an embodiment of the present disclosure includes a plurality of user terminals 110, 120, and 130.
The encryption system 100 is configured to generate a ciphertext using a public key generated by a plurality of users in cooperation. Only when all of the users agree does the encryption system 100 enable the ciphertext generated using the public key to be decrypted or enable a result of performing evaluation on ciphertexts generated using the public key to be decrypted.
The plurality of user terminals 110, 120, and 130 are terminals that are used by different users, for example, desktop personal computers (PCs), laptop PCs, tablet PCs, smartphones, phablets, and the like. However, any device may be used as long as the device has a communication function and a data evaluation function using a wired/wireless network, and the present disclosure is not necessarily limited to a particular type of device.
In the following description, for convenience of description, it is assumed that there are three user terminals 110, 120, and 130 as shown in FIG. 1. However, the number of terminals may be two or four or more depending on the embodiment.
In the following description, it is also assumed that the first user terminal 110 is used by a first user, the second user terminal 120 is used by a second user, and the third user terminal 130 is used by a third user.
According to an embodiment of the present disclosure, an encryption and decryption process performed by the user terminals 110, 120, and 130 may be performed as follows.

Key Generation

Each of the user terminals 110, 120, and 130 generates a private key share and a public key share for the user of the corresponding one of the user terminals 110, 120, and 130 and transmits the public key share to the others user terminals 110, 120, and 130.

4

Also, each of the user terminals 110, 120, and 130 that has received the public key shares of the other users generates the same public key using the generated user key share of the user and the received public key shares of the other users.

Encryption and Homomorphic Evaluation

When a public key is generated, each of the user terminals 110, 120, and 130 generates a ciphertext for plaintext using the generated public key.

In this case, the generated ciphertext may be stored in the corresponding one of the user terminals 110, 120, and 130. In some embodiments, however, the generated ciphertext may be stored in a separate database (not shown) or a separate server (not shown) accessible by the user terminals 110, 120, and 130.

The ciphertext may be generated by the user terminals 110, 120, and 130 using various types of homomorphic encryption techniques capable of evaluating a plurality of ciphertexts encrypted with the same public key in an encrypted state and generating a ciphertext for a result of performing evaluation on plaintext values for each ciphertext.

In this case, each of the user terminals 110, 120, and 130 may perform evaluation on the ciphertexts to generate the ciphertext for the result of evaluating the plaintext values for each ciphertext. In this case, each of the ciphertexts used for the evaluation may be generated by the same user terminal 110, 120, or 130 or by different user terminals 110, 120, and 130.

The evaluation on the ciphertexts may be performed by each of the user terminals 110, 120, and 130, as described above. In some embodiments, however, when the ciphertext generated by the user terminals 110, 120, and 130 is stored in a separate server (not shown), the corresponding server may perform evaluation on the stored ciphertexts and then provide the result to the user terminals 110, 120, and 130.

Decryption

Each of the user terminals 110, 120, and 130 performs partial decryption on the ciphertext using a private key share of the user of the corresponding one of the user terminals 110, 120, and 130. Plaintext for the ciphertext is generated using the results of the partial decryption performed by the user terminals 110, 120, and 130. In this case, the ciphertext may be a ciphertext encrypted with the public key or a ciphertext generated through evaluation on the plurality of ciphertexts encrypted with the public key.

A specific application example of applying the above-described encryption and decryption process to a homomorphic encryption technique capable of approximation is as follows.

Key Generation

First, each of the user terminals 110, 120, and 130 may generate a private key share and a public key share of a user of the corresponding user terminal 110, 120, or 130. In this case, a private key share $sk_i$ and a public key share $pk_i$ of user i (here, i is a user index of $1 \leq i \leq 3$) may satisfy Equation 1 and Equation 2 below:

$$[\text{Equation 1}]$$

$$sk_i = (1, s_i)$$

$$[\text{Equation 2}]$$

$$pk_i = (b_i, a)$$

where si, bi, and a are elements of a polynomial ring and can satisfy $b_i = -a \cdot s_i + e$ (here, e is any very small error value). Also, a may be a value included in the public key shares of all the users in common.

Subsequently, each of the user terminals 110, 120, and 130 may transmit the generated public key share to the others of the user terminals 110, 120, and 130. Also, each of the user terminals 110, 120, and 130 having received the public key shares from the others of the user terminals 110, 120, and 130 may generate a public key pk using the received public key shares and the public key share generated by the corresponding user terminal 110, 120, or 130 itself. In this case, the public key pk may be generated using, for example, Equation 3:

[Equation 3]

$$pk = (b_1 + b_2 + b_3, a) = (b, a) \ .$$

Encryption

When the public key is generated, each of the user terminals 110, 120, and 130 may generate a ciphertext C for plaintext m using the generated public key. In this case, the ciphertext may be generated using, for example, Equation 4 below:

[Equation 4]

$$C = (c_0, c_1) = (v \cdot b + m + e_0, \ v \cdot a + e_1)$$

where plaintext m and v are elements of a polynomial ring, and $e_0$ and $e_1$ are any very small error values.
Meanwhile, the generated ciphertext may be stored in the corresponding one of the user terminals 110, 120, and 130. In some embodiments, however, the ciphertext may be stored in a separate database (not shown) or a separate server (not shown) accessible by the user terminals 110, 120, and 130.

Homomorphic Evaluation

Each of the user terminals 110, 120, and 130 may add a ciphertext $C_1$ for plaintext $m_1$ and a ciphertext $C_2$ for plaintext $m_2$, which are generated through the above encryption process, to calculate $C_1 + C_2$ and thus may generate a ciphertext $C_3$ for $m_1 + m_2$. In detail, when the ciphertext $C_1$ and the ciphertext $C_2$ are expressed as Equation 5 and Equation 6, $C_3$ may be generated using Equation 7 below.

[Equation 5]

$$C_1 = \left( c_{1,0}, c_{1,1} \right) = (v_1 \cdot b + m_1 + e_{0,1}, \ v_1 \cdot a + e_{1,1})$$

[Equation 6]

$$C_2 = \left( c_{2,0}, c_{2,1} \right) = (v_2 \cdot b + m_2 + e_{0,2}, \ v_2 \cdot a + e_{1,2})$$

[Equation 7]

$$C_3 = C_1 + C_2 = \left( c_{3,0}, c_{3,1} \right) = (v_3 \cdot b + m_3 + e_{0,3}, \ v_3 \cdot a + e_{1,3})$$

where $v_3 = v_1 + v_2$ , $e_{0,3} = e_{0,1} + e_{0,2}$ , and $e_{1,3} = e_{1,1} + e_{1,2}$ are satisfied.
In some embodiments, unlike the above example, the generation of the ciphertext $C_3$ may be performed by a server (not shown) for storing the ciphertext $C_1$ and the ciphertext $C_2$. In this case, the server (not shown) may provide the generated ciphertext $C_3$ to the user terminals 110, 120, and 130.

Decryption

Each of the user terminals 110, 120, and 130 may perform partial decryption of the ciphertext $C' = (c_0', c_1')$ using a private key share $sk_i$ for a user of each of the user terminals 110, 120, and 130. In this case, a ciphertext C' may be a ciphertext (e.g., $C_1$ or $C_2$) generated through the above encryption process or a ciphertext (e.g., $C_3$) generated through the above homomorphic evaluation process.
The partial decryption of the ciphertext C' may be performed using, for example, Equation 8 below:

[Equation 8]

$$p_i = c_1' \cdot s_i + e_4' = v' \cdot a \cdot s_i + e_1' \cdot s_i + e_4'$$

where $e_4'$ indicates any very small error value.

Meanwhile, plaintext m' for the ciphertext C' may be generated using, for example, Equation 9 below:

[Equation 9]

$$c_0' + (p_1 + p_2 + p_3) = \left( v' \cdot \sum_{i=1}^{3} b_i + m' + e_0' \right) + \sum_{i=1}^{3} (v' \cdot a \cdot s_i + e_1' \cdot s_i + e_4')$$

$$= m' + v' \cdot \sum_{i=1}^{3} (b_i + a \cdot s_i) + \sum_{i=1}^{3} (e_1' \cdot s_i + e_4') + e_0'$$

$$= m' + e_5' \approx m'$$

In Equation 3, $e_5' = v' \cdot \sum_{i=1}^{3} (b_i + a \cdot s_i) + \sum_{i=1}^{3} (e_1' \cdot s_i + e_4') + e_0'$ may be satisfied and may be set to be a value much smaller than m'.

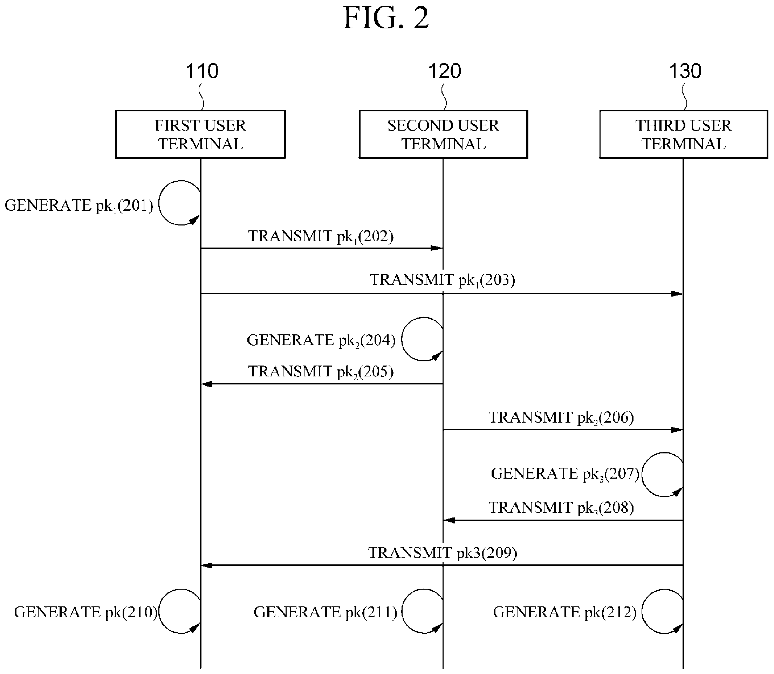

FIG. 2 is a sequence diagram showing a public key generation process according to an embodiment of the present disclosure.

Referring to FIG. 2, a first user terminal 110 generates a public key share $pk_1$ for a first user (201).

Subsequently, the first user terminal 110 transmits the public key share $pk_1$ to a second user terminal 120 and a third user terminal 130 (202, 203).

Subsequently, the second user terminal 120 generates a public key share $pk_2$ for a second user (204).

Subsequently, the second user terminal 120 transmits the public key share $pk_2$ to the first user terminal 110 and the third user terminal 130 (205, 206).

Subsequently, the third user terminal 130 generates a public key share $pk_3$ for a third user (207).

Subsequently, the third user terminal 130 transmits the public key share $pk_3$ to the first user terminal 110 and the second user terminal 120 (208, 209).

Subsequently, the first user terminal 110, the second user terminal 120, and the third user terminal 130 generate a public key pk using pki, $pk_2$, and $pk_3$ (210, 211, 212).

In FIG. 2, the public key generation process has been described as having a plurality of steps. However, at least some of the steps may be performed in a changed order, performed in combination with another step, omitted, divided into sub-steps and then performed, or performed in addition to one or more steps that are not shown.

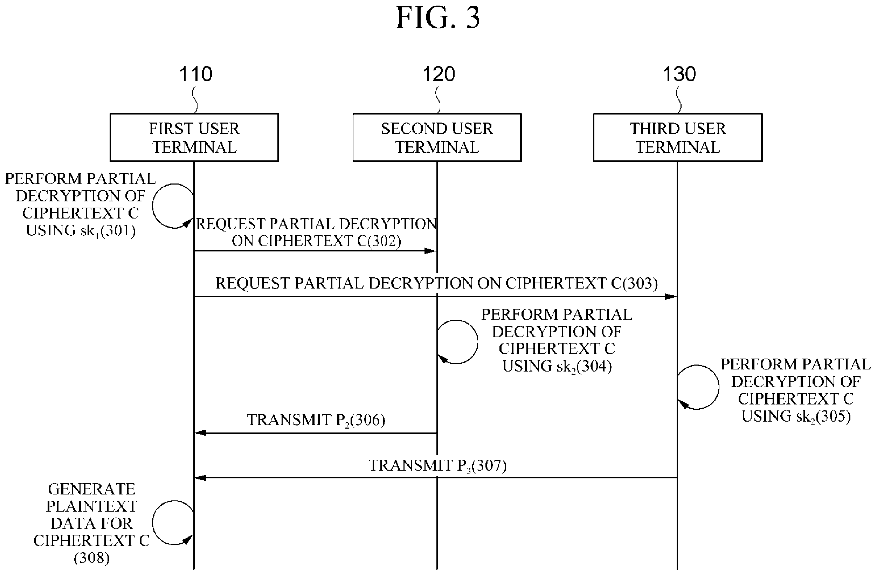

FIG. 3 is a sequence diagram showing a decryption process according to an embodiment of the present disclosure.

Referring to FIG. 3, first, the first user terminal 110 generates a partial decryption result $p_1$ for the ciphertext C using the private key share $sk_1$ of the first user (301).

In this case, the ciphertext C may be an evaluation result of a ciphertext encrypted with the public key pk generated using the public key generation process shown in FIG. 2 or a result of performing evaluation on a plurality of ciphertexts encrypted with the public keys pk.

Subsequently, the first user terminal 110 requests the second user terminal 120 and the third user terminal 130 to perform partial decryption of the ciphertext C (302, 303).

In this case, for example, when the ciphertext C is stored in the first user terminal 110, the first user terminal 110 may transmit the ciphertext C to the second user terminal 120 and the third user terminal 130 to request partial decryption of the ciphertext C.

As another example, when the ciphertext C is stored in a separate database (not shown) or a separate server (not shown) accessible by the first user terminal 110, the second user terminal 120, and the third user terminal 130, the first user terminal 110 may request the second user terminal 120 and the third user terminal 130 to perform partial decryption of the ciphertext C stored in the database (not shown) or the server (not shown).

When the second user terminal 120 is requested to perform the partial decryption of the ciphertext C by the first user terminal 110, the second user terminal 120 generates a partial decryption result $p_2$ for the ciphertext C using the private key share $sk_2$ of the second user (304).

Also, when the third user terminal 130 is requested to perform the partial decryption of the ciphertext C by the first user terminal 110, the third user terminal 130 generates a partial decryption result $p_3$ for the ciphertext C using the private key share $sk_3$ of the third user (305).

Subsequently, the second user terminal 120 and the third user terminal 130 transmit the generated partial decryption results $p_2$ and $p_3$ to the first user terminal 110 (306, 307).

Subsequently, the first user terminal 110 generates plaintext for the ciphertext C using the partial decryption results $p_1$, $p_2$, and $p_3$ (308).

In the sequence diagram illustrated in FIG. 3, the decryption process has been described as having a plurality of steps. However, at least some of the steps may be performed in a changed order, performed in combination with another step, omitted, divided into sub-steps and then performed, or performed in addition to one or more steps that are not shown.

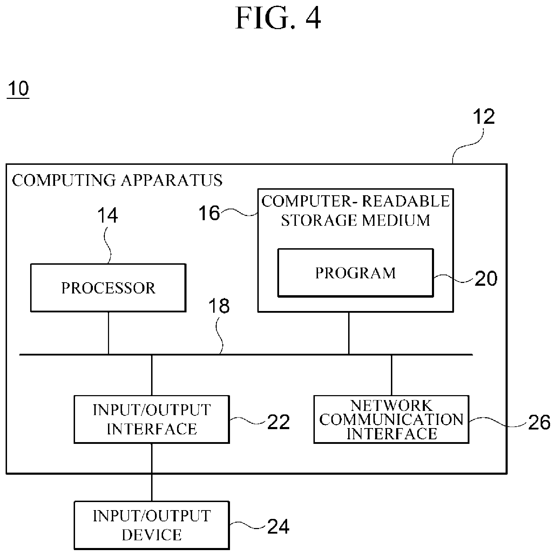

FIG. 4 is a block diagram illustrating a computing environment including a computing apparatus suitable for use in example embodiments. In the illustrated embodiment, each component may have a function and capability that differs from those described below, and an additional component may be included in addition to those in the following description.

As shown, a computing environment 10 includes a computing apparatus 12. According to an embodiment, the computing apparatus 12 may be one or more components included in each of the user terminals 110, 120, and 130.

The computing apparatus 12 includes at least one processor 14, a computer-readable storage medium 16, and a communication bus 18. The processor 14 may enable the computing apparatus 12 to operate according to the aforementioned example embodiment. For example, the processor 14 may execute one or more programs stored in the computer-readable storage medium 16. The one or more programs may include one or more computer executable instructions which may be configured to enable the computing apparatus 12 to perform operations according to an example embodiment when they are executed by the processor 14.

The computer-readable storage medium 16 is configured to store computer-executable instructions, program codes, program data, and/or other suitable forms of information. The program 20 stored in the computer-readable storage medium 16 includes a set of instructions executable by the processor 14. In an embodiment, the computer-readable storage medium 16 may be a memory (a volatile memory such as a random access memory, a non-volatile memory, or an appropriate combination thereof), one or more magnetic disk storage devices, optical disk storage devices, flash memory devices, other forms of storage media that may be accessed by the computing apparatus 12 and are configured to store desired information, or a suitable combination thereof.

The communication bus 18 connects the processor 14, the computer-readable storage medium 16, and various other components of the computing apparatus 12 to one another.

Also, the computing apparatus 12 may include one or more input/output interfaces 22 for providing an interface for one or more input/output devices 24, and one or more network communication interfaces 26. The input/output interfaces 22 and the network communication interfaces 26 are connected to the communication bus 18. The input/output devices 24 may be connected to other components of the computing apparatus 12 through the input/output interfaces 22. The input/output devices 24 may include input devices such as a pointing device (a mouse, a track pad, etc), a keyboard, a touch input device (a touchpad, a touch screen, etc.), a voice or sound input device, various kinds of sensor devices, and/or a capture device and/or may include output devices such as a display device, a printer, a speaker, and/or a network card. The input/output devices 24 may be included in the computing apparatus 12 as components of the computing apparatus 12 and may be connected to the computing apparatus 12 as separate devices distinct from the computing apparatus 12.

According to the embodiments of the present disclosure, by distributing secret key management authority equally to all users who have cooperated to generate a public key and allowing decryption only when all of the users agree, it is possible to prevent unauthorized data leakage due to private key leakage and also to enable secure private key management even between users who lack mutual trust.

Although the disclosure has been described in detail with reference to exemplary embodiments, it will be understood by those skilled in the art that various changes may be made without departing from the scope of the disclosure. Therefore, the scope of the present disclosure is not to be construed as being limited to the described embodiments, but is defined by the appended claims.

**Claims**

1. An encryption method performed by a computing apparatus (12, 110, 120, 130) including one or more processors (14) and a memory (16) for storing one or more programs (20) executed by the one or more processors, the encryption method comprising:

   generating (201, 204, 207) a public key share of a user;
   receiving (202, 203, 205, 206, 208, 209) public key shares of one or more other users from terminals of the one or more other users;
   generating (210, 211, 212) a public key using the public key share of the user and the public key shares of the one or more other users;
   encrypting a first plaintext using the public key, thereby generating a first ciphertext;
   obtaining a second ciphertext resulting from encrypting a second plaintext using the public key; and
   performing homomorphic evaluation on the first and the second ciphertext by adding the first and the second ciphertext, thereby generating a third ciphertext corresponding to the sum of the first and the second plaintext.

2. The encryption method of claim 1, wherein the generating of the public key share comprises:

   generating a private key share of the user; and
   generating a public key share of the user using the private key share of the user; and/or
   wherein the public key shares of the one or more other users are generated using private key shares of the one or more other users.

3. The encryption method of claim 1 or 2, further comprising providing the generated public key share to the terminals of the one or more other users.

4. An encryption apparatus comprising:

   one or more processors (14);
   a memory (16); and
   one or more programs (20),
   wherein,
   the one or more programs are stored in the memory and executed by the one or more processors, and
   the programs comprise instructions for:

      generating (201, 204, 207) a public key share of a user;
      receiving (202, 203, 205, 206, 208, 209) public key shares of one or more other users from terminals of the one or more other users;
      generating (210, 211, 212) a public key using the public key share of the user and the public key shares of the one or more other users; and
      encrypting a first plaintext using the public key, thereby generating a first ciphertext;
      obtaining a second ciphertext resulting from encrypting a second plaintext using the public key; and
      performing homomorphic evaluation on the first and the second ciphertext by adding the first and the second ciphertext, thereby generating a third ciphertext corresponding to the sum of the first and the second plaintext.

5. The encryption apparatus of claim 4, wherein the generating of the public key share comprises:

   generating a private key share of the user; and
   generating a public key share of the user using the private key share of the user; and/or
   wherein the public key shares of the one or more other users are generated using private key shares of the one or more other users.

6. The encryption apparatus of claim 4, wherein the programs further include instructions for providing the generated public key share to the terminals of the one or more other users.

7. A decryption method performed by a computing apparatus (12, 110, 120, 130) including one or more processors (14) and a memory (16) for storing one or more programs (20) executed by the one or more processors, the decryption method comprising:

generating (301, 304, 305) a partial decryption result for a ciphertext encrypted with a public key by using a private key share of a user, wherein the ciphertext is generated by adding a plurality of ciphertexts encypted with the public key in an encrypted state as defined in claim 1;

requesting (302, 303) terminals of one or more other users to perform partial decryption of the ciphertext;

receiving (306, 307) partial decryption results for the ciphertext using private key shares of the one or more other users from the one or more other user terminals; and

generating plaintext for the ciphertext using the generated partial decryption result and the partial decryption results received from the one or more other users, wherein the plaintext is a result of adding plaintexts for the plurality of ciphertexts.

8. The decryption method of claim 7, wherein the public key is generated using a public key share of the user and public key shares of the one or more other users; and/or

   wherein,
   the public key share of the user is generated using the private key share of the user, and
   the public key shares of the one or more other users are generated using the private key shares of the one or more other users.

9. The decryption method of claim 7, wherein the generating of the plaintext comprises generating plaintext for the ciphertext by adding the generated partial decryption result and the partial decryption results received from the one or more other users.

10. A decryption apparatus comprising:

    one or more processors (14);
    a memory (16); and
    one or more programs (20),
    wherein,
    the one or more programs are stored in the memory and executed by the one or more processors, and
    the program comprises instructions for:

       generating (301, 304, 305) a partial decryption result for a ciphertext encrypted with a public key by using a private key share of a user, wherein the ciphertext is generated by adding a plurality of ciphertexts encypted with the public key in an encrypted state as defined in claim 4;
       requesting (302, 303) terminals of one or more other users to perform partial decryption of the ciphertext;
       receiving (306, 307) partial decryption results for the ciphertext using private key shares of the one or more other users from the one or more other user terminals;
       and
       generating plaintext for the ciphertext using the generated partial decryption result and the partial decryption results received from the one or more other users,
       wherein the plaintext is a result of adding plaintexts for the plurality of ciphertexts.

11. The decryption apparatus of claim 10, wherein the public key is generated using a public key share of the user and public key shares of the one or more other users.

12. The decryption apparatus of claim 11, wherein,

    the public key share of the user is generated using the private key share of the user, and
    the public key shares of the one or more other users are generated using the private key shares of the one or more other users.

13. The decryption apparatus of claim 11, wherein the generating of the plaintext comprises generating plaintext for the ciphertext by adding the generated partial decryption result and the partial decryption results received from the one or more other users.

**Patentansprüche**

1. Verschlüsselungsverfahren, das von einer Computervorrichtung (12, 110, 120, 130) ausgeführt wird, die einen oder mehrere Prozessoren (14) und einen Speicher (16) zur Speicherung eines oder mehrerer Programme (20) enthält, die von dem einen oder den mehreren Prozessoren ausgeführt werden, wobei das Verschlüsselungsverfahren Folgendes umfasst:

   Erzeugen (201, 204, 207) eines öffentlichen Schlüsselanteils eines Benutzers;
   Empfangen (202, 203, 205, 206, 208, 209) von öffentlichen Schlüsselanteilen eines oder mehrerer anderer Benutzer von Endgeräten des einen oder der mehreren anderen Benutzer;
   Erzeugen (210, 211, 212) eines öffentlichen Schlüssels unter Verwendung des öffentlichen Schlüsselanteils des Benutzers und der öffentlichen Schlüsselanteile des einen oder der mehreren anderen Benutzer;
   Verschlüsseln eines ersten Klartextes unter Verwendung des öffentlichen Schlüssels, wodurch ein erster Geheimtext erzeugt wird;
   Erhalten eines zweiten Geheimtextes, der aus der Verschlüsselung eines zweiten Klartextes unter Verwendung des öffentlichen Schlüssels resultiert; und
   Durchführen einer homomorphen Auswertung des ersten und des zweiten Geheimtextes durch Addieren des ersten und des zweiten Geheimtextes, wodurch ein dritter Geheimtext erzeugt wird, der der Summe des ersten und des zweiten Klartextes entspricht.

2. Verschlüsselungsverfahren nach Anspruch 1, wobei das Erzeugen des öffentlichen Schlüsselanteils Folgendes umfasst:

   Erzeugen eines privaten Schlüsselanteils des Benutzers; und
   Erzeugen eines öffentlichen Schlüsselanteils des Benutzers unter Verwendung des privaten Schlüsselanteils des Benutzers; und/oder
   wobei die öffentlichen Schlüsselanteile des einen oder der mehreren anderen Benutzer unter Verwendung privater Schlüsselanteile des einen oder der mehreren anderen Benutzer erzeugt werden.

3. Verschlüsselungsverfahren nach Anspruch 1 oder 2, ferner umfassend die Bereitstellung des erzeugten öffentlichen Schlüssels für die Endgeräte des einen oder der mehreren anderen Benutzer.

4. Verschlüsselungsvorrichtung, die Folgendes umfasst:

   einen oder mehrere Prozessoren (14);
   einen Speicher (16); und
   ein oder mehrere Programme (20),
   wobei das eine oder die mehreren Programme in dem Speicher gespeichert sind und von dem einen oder den mehreren Prozessoren ausgeführt werden, und
   die Programme Anweisungen umfassen, zum:

      Erzeugen (201, 204, 207) eines öffentlichen Schlüsselanteils eines Benutzers;
      Empfangen (202, 203, 205, 206, 208, 209) von öffentlichen Schlüsselanteilen eines oder mehrerer anderer Benutzer von Endgeräten des einen oder der mehreren anderen Benutzer;
      Erzeugen (210, 211, 212) eines öffentlichen Schlüssels unter Verwendung des öffentlichen Schlüsselanteils des Benutzers und der öffentlichen Schlüsselanteile des einen oder der mehreren anderen Benutzer; und
      Verschlüsseln eines ersten Klartextes unter Verwendung des öffentlichen Schlüssels, wodurch ein erster Geheimtext erzeugt wird;
      Erhalten eines zweiten Geheimtextes, der aus der Verschlüsselung eines zweiten Klartextes unter Verwendung des öffentlichen Schlüssels resultiert; und
      Durchführen einer homomorphen Auswertung des ersten und des zweiten Geheimtextes durch Addieren des ersten und des zweiten Geheimtextes, wodurch ein dritter Geheimtext erzeugt wird, der der Summe des ersten und des zweiten Klartextes entspricht.

5. Verschlüsselungsvorrichtung nach Anspruch 4, wobei das Erzeugen des öffentlichen Schlüsselanteils Folgendes umfasst:

   Erzeugen eines privaten Schlüsselanteils des Benutzers; und

Erzeugen eines öffentlichen Schlüsselanteils des Benutzers unter Verwendung des privaten Schlüsselanteils des Benutzers; und/oder
wobei die öffentlichen Schlüsselanteile des einen oder der mehreren anderen Benutzer unter Verwendung privater Schlüsselanteile des einen oder der mehreren anderen Benutzer erzeugt werden.

6. Verschlüsselungsvorrichtung nach Anspruch 4, wobei die Programme ferner Anweisungen enthalten zum Bereitstellen des erzeugten öffentlichen Schlüssels für die Endgeräte des einen oder der mehreren anderen Benutzer.

7. Entschlüsselungsverfahren, das von einer Computervorrichtung (12, 110, 120, 130) ausgeführt wird, die einen oder mehrere Prozessoren (14) und einen Speicher (16) zur Speicherung eines oder mehrerer Programme (20) enthält, die von dem einen oder den mehreren Prozessoren ausgeführt werden, wobei das Entschlüsselungsverfahren Folgendes umfasst:

Erzeugen (301, 304, 305) eines Teilentschlüsselungsergebnisses für einen mit einem öffentlichen Schlüssel verschlüsselten Geheimtext durch Verwendung eines privaten Schlüsselanteils eines Benutzers, wobei der Geheimtext durch Addieren einer Vielzahl von mit dem öffentlichen Schlüssel verschlüsselten Geheimtexten in einem verschlüsselten Zustand gemäß Anspruch 1 erzeugt wird;
Auffordern (302, 303) von Endgeräten eines oder mehrerer anderer Benutzer, eine Teilentschlüsselung des Geheimtextes vorzunehmen;
Empfangen (306, 307) von Teilentschlüsselungsergebnissen für den Geheimtext unter Verwendung von privaten Schlüsselanteilen des einen oder der mehreren anderen Benutzer von dem einen oder den mehreren anderen Benutzerendgeräten; und
Erzeugen von Klartext für den Geheimtext unter Verwendung des erzeugten Teilentschlüsselungsergebnisses und der von dem einen oder den mehreren anderen Benutzern empfangenen Teilentschlüsselungsergebnisse, wobei der Klartext ein Ergebnis des Addierens von Klartexten für die Vielzahl von Geheimtexten ist.

8. Entschlüsselungsverfahren nach Anspruch 7, wobei der öffentliche Schlüssel unter Verwendung eines öffentlichen Schlüsselanteils des Benutzers und öffentlicher Schlüsselanteile des einen oder der mehreren anderen Benutzer erzeugt wird; und/oder
wobei,

der öffentliche Schlüsselanteil des Benutzers unter Verwendung des privaten Schlüsselanteils des Benutzers erzeugt wird, und
die öffentlichen Schlüsselanteile des einen oder der mehreren anderen Benutzer unter Verwendung der privaten Schlüsselanteile des einen oder der mehreren anderen Benutzer erzeugt werden.

9. Entschlüsselungsverfahren nach Anspruch 7, wobei das Erzeugen des Klartextes das Erzeugen von Klartext für den Geheimtext durch Addieren des erzeugten Teilentschlüsselungsergebnisses und der von dem einen oder den mehreren anderen Benutzern empfangenen Teilentschlüsselungsergebnisse umfasst.

10. Entschlüsselungsvorrichtung, die Folgendes umfasst:

einen oder mehrere Prozessoren (14);
einen Speicher (16); und
ein oder mehrere Programme (20),
wobei das eine oder die mehreren Programme in dem Speicher gespeichert sind und von dem einen oder den mehreren Prozessoren ausgeführt werden, und
das Programm Anweisungen umfasst, zum:

Erzeugen (301, 304, 305) eines Teilentschlüsselungsergebnisses für einen mit einem öffentlichen Schlüssel verschlüsselten Geheimtext durch Verwendung eines privaten Schlüsselanteils eines Benutzers, wobei der Geheimtext durch Addieren einer Vielzahl von mit dem öffentlichen Schlüssel verschlüsselten Geheimtexten in einem verschlüsselten Zustand gemäß Anspruch 4 erzeugt wird;
Auffordern (302, 303) von Endgeräten eines oder mehrerer anderer Benutzer, eine Teilentschlüsselung des Geheimtextes vorzunehmen;
Empfangen (306, 307) von Teilentschlüsselungsergebnissen für den Geheimtext unter Verwendung von privaten Schlüsselanteilen des einen oder der mehreren anderen Benutzer von dem einen oder den mehreren anderen Benutzerendgeräten; und

Erzeugen von Klartext für den Geheimtext unter Verwendung des erzeugten Teilentschlüsselungsergebnisses und der von dem einen oder den mehreren anderen Benutzern empfangenen Teilentschlüsselungsergebnisse, wobei der Klartext ein Ergebnis des Addierens von Klartexten für die Vielzahl von Geheimtexten ist.

11. Entschlüsselungsvorrichtung nach Anspruch 10, wobei der öffentliche Schlüssel unter Verwendung eines öffentlichen Schlüsselanteils des Benutzers und öffentlicher Schlüsselanteile des einen oder der mehreren anderen Benutzer erzeugt wird.

12. Entschlüsselungsvorrichtung nach Anspruch 11, wobei:

der öffentliche Schlüsselanteil des Benutzers unter Verwendung des privaten Schlüsselanteils des Benutzers erzeugt wird, und
die öffentlichen Schlüsselanteile des einen oder der mehreren anderen Benutzer unter Verwendung der privaten Schlüsselanteile des einen oder der mehreren anderen Benutzer erzeugt werden.

13. Entschlüsselungsvorrichtung nach Anspruch 11, wobei das Erzeugen des Klartextes das Erzeugen von Klartext für den Geheimtext durch Addieren des erzeugten Teilentschlüsselungsergebnisses und der von dem einen oder den mehreren anderen Benutzern empfangenen Teilentschlüsselungsergebnisse umfasst.

**Revendications**

1. Procédé de cryptage exécuté par un appareil informatique (12, 110, 120, 130) incluant un ou plusieurs processeurs (14) et une mémoire (16) pour stocker un ou plusieurs programmes (20) exécutés par l'un ou plusieurs processeurs, le procédé de cryptage comprenant :

génération (201, 204, 207) d'un partage de clé publique d'un utilisateur ;
réception (202, 203, 205, 206, 208, 209) de partages de clé publique d'un ou plusieurs autres utilisateurs depuis des terminaux de l'un ou plusieurs autres utilisateurs ;
génération (210, 211, 212) d'une clé publique en utilisant le partage de clé publique de l'utilisateur et les partages de clé publique de l'un ou plusieurs autres utilisateurs ;
cryptage d'un premier texte clair en utilisant la clé publique, générant ainsi un premier texte de cryptage ;
obtention d'un deuxième texte de cryptage résultant d'un cryptage d'un deuxième texte clair au moyen de la clé publique ; et
exécution d'une évaluation homomorphe du premier et du deuxième textes de cryptage en ajoutant le premier et le deuxième textes de cryptage, générant ainsi un troisième texte de cryptage correspondant à la somme des premier et deuxième textes de cryptage.

2. Le procédé de cryptage de la revendication 1, dans lequel une génération du partage de clé publique comprend :

une génération d'un partage de clé privée de l'utilisateur ; et
une génération d'un partage de clé publique de l'utilisateur en utilisant le partage de clé privée de l'utilisateur ; et/ou
dans lequel les partages de clé publique de l'un ou plusieurs autres utilisateurs sont générés en utilisant des partages de clé privée de l'un ou plusieurs autres utilisateurs.

3. Le procédé de cryptage de la revendication 1 ou 2, comprenant en outre une fourniture du partage de clé publique généré aux terminaux de l'un ou plusieurs autres utilisateurs.

4. Appareil de cryptage comprenant :

un ou plusieurs processeurs (14) ;
une mémoire (16) ; et
un ou plusieurs programmes (20),
dans lequel,
l'un ou plusieurs programmes sont stockés en mémoire et exécutés par l'un ou plusieurs processeurs, et
les programmes comprennent des instructions pour :

génération (201, 204, 207) d'un partage de clé publique d'un utilisateur ;

réception (202, 203, 205, 206, 208, 209) de partages de clé publique d'un ou plusieurs autres utilisateurs depuis des terminaux de l'un ou plusieurs autres utilisateurs ;

génération (210, 211, 212) d'une clé publique en utilisant le partage de clé publique de l'utilisateur et les partages de clé publique de l'un ou plusieurs autres utilisateurs ; et

cryptage d'un premier texte clair en utilisant la clé publique, générant ainsi un premier texte de cryptage ;

obtention d'un deuxième texte de cryptage résultant d'un cryptage d'un deuxième texte clair au moyen de la clé publique ; et

exécution d'une évaluation homomorphe du premier et du deuxième textes de cryptage en ajoutant le premier et le deuxième textes de cryptage, générant ainsi un troisième texte de cryptage correspondant à la somme des premier et deuxième textes de cryptage.

5. L'appareil de cryptage de la revendication 4, dans lequel la génération du partage de clé publique comprend :

une génération d'un partage de clé privée de l'utilisateur ; et

une génération d'un partage de clé publique de l'utilisateur en utilisant le partage de clé privée de l'utilisateur ; et/ou

dans lequel les partages de clé publique de l'un ou plusieurs autres utilisateurs sont générés en utilisant des partages de clé privée de l'un ou plusieurs autres utilisateurs.

6. L'appareil de cryptage de la revendication 4, dans lequel les programmes incluent en outre des instructions pour fournir le partage de clé publique généré aux terminaux de l'un ou plusieurs autres utilisateurs.

7. Procédé de décryptage exécuté par un appareil informatique (12, 110, 120, 130) incluant un ou plusieurs processeurs (14) et une mémoire (16) pour stocker un ou plusieurs programmes (20) exécutés par l'un ou plusieurs processeurs, le procédé de décryptage comprenant :

génération (301, 304, 305) d'un résultat de décryptage partiel pour un texte de cryptage crypté avec une clé publique en utilisant un partage de clé privée d'un utilisateur, dans lequel le texte de cryptage est généré en ajoutant une pluralité de textes de cryptage cryptés avec la clé publique dans un état crypté tel que défini à la revendication 1 ;

demande (302, 303) à des terminaux d'un ou plusieurs autres utilisateurs d'exécuter un décryptage partiel du texte de cryptage ;

réception (306, 307) de résultats de décryptage partiel pour le texte de cryptage en utilisant des partages de clé privée de l'un ou plusieurs autres utilisateurs provenant de terminaux de l'un ou plusieurs autres utilisateurs ; et

génération d'un texte clair pour le texte de cryptage en utilisant le résultat de décryptage partiel généré et les résultats de décryptage partiel reçus de l'un ou plusieurs autres utilisateurs, dans lequel le texte clair est un résultat d'un ajout de textes clairs pour la pluralité de textes de cryptage.

8. Le procédé de décryptage de la revendication 7, dans lequel la clé publique est générée en utilisant un partage de clé publique de l'utilisateur et des partages de clé publique de l'un ou plusieurs autres utilisateurs ; et/ou dans lequel,

le partage de clé publique de l'utilisateur est généré en utilisant le partage de clé privée de l'utilisateur, et

les partages de clé publique de l'un ou plusieurs autres utilisateurs sont générés en utilisant les partages de clé privée de l'un ou plusieurs autres utilisateurs.

9. Le procédé de décryptage de la revendication 7, dans lequel la génération du texte clair comprend une génération d'un texte clair pour le texte de cryptage en ajoutant le résultat de décryptage partiel généré et les résultats de décryptage partiel reçus de l'un ou plusieurs autres utilisateurs.

10. Appareil de décryptage comprenant :

un ou plusieurs processeurs (14) ;

une mémoire (16) ; et

un ou plusieurs programmes (20),

dans lequel,

l'un ou plusieurs programmes sont stockés dans la mémoire et exécutés par l'un ou plusieurs processeurs, et le programme comprend des instructions pour :

génération (301, 304, 305) d'un résultat de décryptage partiel pour un texte de cryptage crypté avec une clé publique en utilisant un partage de clé privée d'un utilisateur, dans lequel le texte de cryptage est généré en ajoutant une pluralité de textes de cryptage cryptés avec la clé publique dans un état crypté tel que défini à la revendication 4 ;
demande (302, 303) à des terminaux d'un ou plusieurs autres utilisateurs d'exécuter un décryptage partiel du texte de cryptage ;
réception (306, 307) de résultats de décryptage partiel pour le texte de cryptage en utilisant des partages de clé privée de l'un ou plusieurs autres utilisateurs provenant de terminaux de l'un ou plusieurs autres utilisateurs ; et
génération d'un texte clair pour le texte de cryptage en utilisant le résultat de décryptage partiel généré et les résultats de décryptage partiel reçus de l'un ou plusieurs autres utilisateurs, dans lequel le texte clair est un résultat d'un ajout de textes clairs pour la pluralité de textes de cryptage.

11. Le dispositif de décryptage de la revendication 10, dans lequel la clé publique est générée en utilisant un partage de clé publique de l'utilisateur et des partages de clé publique de l'un ou plusieurs autres utilisateurs.

12. L'appareil de décryptage de la revendication 11, dans lequel,

le partage de clé publique de l'utilisateur est généré en utilisant le partage de clé privée de l'utilisateur, et
les partages de clé publique de l'un ou plusieurs autres utilisateurs sont générés en utilisant les partages de clé privée de l'un ou plusieurs autres utilisateurs.

13. L'appareil de décryptage de la revendication 11, dans lequel la génération du texte clair comprend une génération d'un texte clair pour le texte de cryptage en ajoutant le résultat de décryptage partiel généré et les résultats de décryptage partiel reçus de l'un ou plusieurs autres utilisateurs.

# FIG. 1

100

# FIG. 2

# FIG. 3

**110** — FIRST USER TERMINAL

**120** — SECOND USER TERMINAL

**130** — THIRD USER TERMINAL

PERFORM PARTIAL DECRYPTION OF CIPHERTEXT C USING $sk_1$(301)

REQUEST PARTIAL DECRYPTION ON CIPHERTEXT C(302)

REQUEST PARTIAL DECRYPTION ON CIPHERTEXT C(303)

PERFORM PARTIAL DECRYPTION OF CIPHERTEXT C USING $sk_2$(304)

PERFORM PARTIAL DECRYPTION OF CIPHERTEXT C USING $sk_3$(305)

TRANSMIT $P_2$(306)

TRANSMIT $P_3$(307)

GENERATE PLAINTEXT DATA FOR CIPHERTEXT C (308)

# FIG. 4

<u>10</u>

**EP 3 644 545 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180126802

- US 9252942 B

**Non-patent literature cited in the description**

- Security Analysis of Re-Encryption RPC Mix Nets. **RALF KUESTERS et al.** IACR. International Association for Cryptologic Research, 29 March 2015, vol. 20150401, 1-50

- Kaleidoscope: An Efficient Poker Protocol with Payment Distribution and Penalty Enforcement. **BERNARDO DAVID et al.** IACR. International Association for Cryptologic Research, 18 April 2018, vol. 20180418, 1-29